# FASCICULE DE BREVET EUROPEEN

(11) **EP 3 182 286 B1**
(45) Date de publication et mention de la délivrance du brevet: **12.08.2020**
(21) Numéro de dépôt: 16204849.0
(22) Date de dépôt: 16.12.2016
(51) Int. Cl.: G06F 11/263, G06F 11/36, G06F 21/60, G06F 11/26

(54) **PROCEDE DE VERIFICATION DE FONCTIONNALITES D'UN LOGICIEL DESTINE A ETRE EMBARQUE DANS UN COMPOSANT CRYPTOGRAPHIQUE, SYSTEME**
VERFAHREN ZUR ÜBERPRÜFUNG DER FUNKTIONEN EINER SOFTWARE, DIE ZUM EINBAU IN EINE KRYPTOGRAPHISCHE KOMPONENTE BESTIMMT IST, UND ENTSPRECHENDES SYSTEM
METHOD FOR VERIFYING SOFTWARE FUNCTIONALITIES INTENDED FOR BEING ON-BOARD A CRYPTOGRAPHIC COMPONENT, SYSTEM

(30) Priorité: 18.12.2015 FR 1562841
(43) Date de publication de la demande: 21.06.2017
(73) Titulaire: Airbus DS SLC, 78990 Elancourt (FR)
(72) Inventeur: PRAT, Julien, 75017 Paris (FR); VETU, Fany, 92130 ISSY-LES-MOULINEAUX (FR)
(74) Mandataire: Cabinet Camus Lebkiri

(56) Documents cités:
- US-A- 4 481 627
- US-A1- 2003 014 703
- US-A1- 2010 262 864
- US-A1- 2013 066 954
- DI NATALE G ET AL: "A Reliable Architecture for the Advanced Encryption Standard", PROCEEDINGS 13TH IEEE EUROPEAN TEST SYMPOSIUM - ETS 2008 - 25-29 MAY 2008, VERBANIA, ITALY, IEEE, NEW YORK, NY, US, 25 mai 2008 (2008-05-25), pages 13-18, XP031281076, ISBN: 978-0-7695-3150-2

## Description

### DOMAINE

Le domaine de l'invention concerne les procédés permettant de valider l'état d'une mémoire après l'exécution d'un programme exécutable lorsque ce programme manipule des données cryptées. La validation de la mémoire permet de juger de la bonne exécution d'un programme. Le domaine concerne donc celui des procédés permettant une vérification du bon fonctionnement d'un programme d'ordinateur, également appelé logiciel, avant sa mise en production dans un composant dédié.

### ETAT DE L'ART

Actuellement, lorsqu'un programme est compilé et stocké dans une mémoire physique, il est possible de valider son contenu en comparant l'état de la mémoire avec une référence attendue. Cette opération permet une première validation avant d'autres validations du programme par exemple en testant certaines fonctions.

Certains outils tels que des débogueurs, « debugger » dans la terminologie anglo-saxonne, permettent de valider pas à pas un programme compilé sur une mémoire afin de tester l'ensemble des fonctions exécutables.

Or pour les programmes comportant des fonctions cryptographiques et/ou pilotant des composants traitant des données cryptographiques, l'accès aux données sauvegardées par de telles fonctions ou de tels composants est généralement protégé et il n'est pas possible de lire le contenu de la mémoire de sorte à vérifier la bonne exécution d'une fonction.

En outre, une opération visant à comparer l'état de la mémoire d'un programme avec un état de référence permet rapidement d'obtenir un statut de bon ou de mauvais fonctionnement d'une fonction ou d'un composant. Or, lorsque le composant est un composant cryptographique, l'accès à la mémoire est quasiment impossible compte tenu des mécanismes de protections naturellement mis en œuvre pour protéger l'accès et la copie des données chiffrées du composant.

Un composant cryptographique permet l'exécution de différentes fonctions au moyen d'un logiciel embarqué dans le composant cryptographique. Par exemple, une fonction permet de traiter des données non chiffrées afin de les chiffrer. Dans ce cadre, sans accès à la mémoire du composant cryptographique, les tests consistants à valider le bon fonctionnement d'un tel composant cryptographique sont difficiles à mettre en œuvre. Les principales opérations réalisées par les fonctions cryptographiques ne peuvent être validées simplement lors d'opérations de débogage.

En conséquence, la mémoire d'un tel composant étant protégée, l'accès aux données sauvegardées dans une mémoire chiffrée nécessite de tester le composant lorsque ce dernier est dans une configuration opérationnelle. Ces opérations entrainent des coûts supplémentaires et peuvent être longues.

Dans ce cadre, les opérations simples de comparaison de l'état de la mémoire sont difficiles à mettre en oeuvre lorsque le composant est un composant cryptographique.

Il n'existe pas de moyen de vérifier sur un composant cryptographique que le contenu qui a été inscrit sur la mémoire non volatile est bien conforme aux attentes.

Compte tenu du fait qu'il est quasiment impossible de « photographier » la mémoire d'un composant cryptographique pour permettre la réalisation d'opération de débogage, une limitation aux procédés de programmation, de test et de validation de l'exécution du programme apparait aujourd'hui dans les solutions techniques proposées.

Le document D1 (DI NATALE G ET AL: "A Reliable Architecture for the Advanced Encryption Standard") est considéré comme l'état de la technique le plus proche de l'objet de l'invention car il appartient au même domaine technique des fonctions cryptographiques. Le document D1 concerne la détection de défaillances matérielles lors de l'exécution d'un algorithme de chiffrement de type AES, l'algorithme étant exécuté en parallèle sur plusieurs blocs identiques (« RSMA blocks »). Pour ce faire, à chaque cycle d'horloge, la sortie de deux des blocs ayant reçus les mêmes entrées sont comparées pour détecter d'éventuelles défaillances . Les défaillances peuvent donc être détectées seulement lorsque la sortie du bloc concerné est comparée à celle d'un autre bloc. En conséquence, il est possible que des erreurs surviennent sans qu'elles soient détectées.

### RESUME DE L'INVENTION

L'invention vise à pallier aux inconvénients précités.

L'invention est définie par un procédé de validation du fonctionnement d'un premier logiciel (SW1) destiné à être embarqué dans un composant cryptographique selon la revendication 1 et par un système de tests d'un logiciel exécutant un ensemble de fonctions cryptographique d'un logiciel destiné à être intégré dans un composant cryptographique selon la revendication 12. Des modes de réalisation avantageux sont décrits dans les revendications dépendantes.

Le système de l'invention permet de mettre en œuvre toutes les étapes du procédé de l'invention ainsi que tous les modes de réalisation.

### BREVE DESCRIPTION DES FIGURES

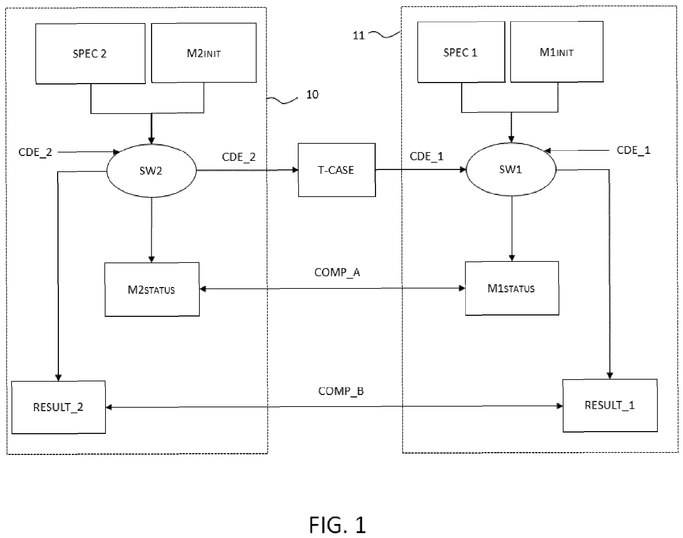

D'autres caractéristiques et avantages de l'invention ressortiront à la lecture de la description détaillée qui suit, en référence aux figures annexées, qui illustrent :
▪ figure 1 : un schéma fonctionnel des principales étapes du procédé de l'invention.

### DESCRIPTION

Dans la présente invention on entend par « composant cryptographique », un composant comprenant une mémoire, des entrées et des sorties, un processeur tel qu'un microprocesseur et réalisant des fonctions cryptographiques. La mémoire comprend une mémoire volatile telle qu'une RAM et une mémoire non volatile telle qu'une mémoire Flash. La mémoire volatile efface ses données sauvegardées à chaque reboot de la mémoire volatile. La mémoire non volatile sauvegarde les données stockées lors des différentes opérations exécutées par les fonctions cryptographiques.

Parmi les fonctions cryptographiques assurées par un composant cryptographique, on trouve par exemple :
▪ une fonction d'authentification ;
▪ une fonction de chiffrement ou de déchiffrement ;
▪ une fonction de signature ou de vérification d'une signature ;
▪ une fonction de calcul d'empreintes ;
▪ une fonction de stockage de données ;
▪ une fonction de calcul de code d'authentification de message, par exemple de message MAC.

Cette liste est non exhaustive et est citée à titre d'exemple.

Le procédé de l'invention s'applique à tout composant cryptographique qui impose de préserver l'état de la mémoire, c'est-à-dire son contenu, vis-à-vis d'un tiers. Généralement, la mémoire d'un composant cryptographique n'est pas accessible. Lorsqu'elle est accessible, les données sont chiffrées et ne peuvent pas être récupérées « en clair » par un tiers. Le procédé de l'invention permet lors de phases de tests et de validation du logiciel d'un composant cryptographique de vérifier le bon fonctionnement du logiciel malgré la non accessibilité de l'état de la mémoire modifiée par l'exécution d'une fonction cryptographique.

Chaque fonction cryptographique peut être représentée par un ensemble d'instructions permettant, à partir de données d'entrées, de générer des données de sorties comme par exemple une clef chiffrée. Certaines instructions mettent en oeuvre les entrées et les sorties du composant et/ou la mémoire de sorte que l'état de la mémoire ou du composant est modifiée par l'exécution de ces instructions. D'autres instructions ne modifient pas l'état de la mémoire ou certaines entrées ou sorties du composant cryptographique.

Un simulateur au sens de la présente invention d'un composant cryptographique est réalisé pour tester les principales fonctions cryptographiques ayant un impact sur l'état de la mémoire du composant ou ses entrées et sorties. Un avantage de l'utilisation d'un simulateur 11 est de pouvoir lire l'état de la mémoire M1 et de le comparer avec un état d'une mémoire M2 d'un banc de test 10 reproduisant les modifications de l'état de la mémoire. Le simulateur 11 permet de définir les accès à la mémoire M1 et d'extraire son contenu pour effectuer des opérations de comparaison.

Un premier logiciel SW1 est destiné à être embarqué sur le composant cryptographique. Le premier logiciel SW1 permet de réaliser un ensemble de fonctions cryptographiques. Le premier logiciel SW1 pour être testé est embarqué dans un simulateur.

Selon un mode de réalisation de l'invention, lorsque le premier logiciel SW1 est testé et validé, il est alors ensuite embarqué sur un composant cryptographique qui est intégré dans un dispositif de communication tel qu'un mobile.

Les entrées et sorties du composant cryptographique sont reproduites dans le simulateur permettant de tester et valider le logiciel SW1.

Un second logiciel SW2 est conçu pour reproduire des fonctions simplifiées du premier logiciel SW1. Ainsi le second logiciel SW2 reproduit les principales fonctions cryptographiques du premier logiciel SW1 tout en ne reproduisant pas certains traitements non nécessaires à la validation des fonctions cryptographiques. En effet, le premier logiciel SW1 comporte des instructions n'ayant aucun impact sur l'état de la mémoire ou sur les entrées et sorties.

Le problème que se propose de résoudre l'invention et de définir un protocole de tests, et donc un procédé, permettant de vérifier le bon fonctionnement du premier logiciel SW1 du composant à partir notamment du second logiciel SW2. Les vérifications peuvent être effectuées aux moyens de comparaisons des états des mémoires associées à chacun des logiciels. Le procédé de l'invention permet donc de disposer d'un outil de test simple tout en assurant que les résultats des tests sont représentatifs du fonctionnement opérationnel du premier logiciel SW1 dans le composant cryptographique.

La figure 1 représente un schéma fonctionnel du procédé de l'invention.

Une première branche 10 représente les différents éléments pour la mise en oeuvre le procédé de l'invention pour valider le premier logiciel SW1 qui est destiné à être embarqué dans un composant cryptographique. A cet effet, la branche 10 comprend un second logiciel SW2 conçu pour :
- générer un état de la mémoire M2_{STATUS} après l'exécution d'une fonction cryptographique du premier logiciel SW1 ;
- générer au moins un résultat RESULT_2 d'une fonction cryptographique du second logiciel SW2 ;
- générer des commandes d'entrée T_CASE conformes à l'environnement du simulateur de la branche 11 pour l'exécution d'une fonction du premier logiciel SW1 correspondante à une fonction du second logiciel SW2.

Le second logiciel SW2 permet d'établir des paramètres de comparaison pour valider la bonne exécution de fonctions cryptographiques du premier logiciel SW1.

Le premier logiciel SW1 est validé dans un simulateur qui comprend les différents éléments de la branche 11. Une spécification SPEC 1 permet de décrire les fonctions cryptographiques du premier logiciel SW1 intégrant toutes les sous-fonctions nécessaires à l'exécution de chaque fonction cryptographique. Certaines sous-fonctions n'ont aucune influence sur l'état de la mémoire, d'autres ne font pas intervenir des paramètres ou valeurs des entrées et des sorties du composant cryptographiques.

Dans la présente description on parle indifféremment de sous fonctions d'une fonction cryptographique ou d'opérations d'une fonction cryptographique.

Le second logiciel SW2 est conçu à partir d'une spécification fonctionnelle SPEC 2 simplifiée de la description fonctionnelle SPEC 1 du logiciel SW1. La simplification de la spécification SPEC 1 comprend par exemple la suppression des sous-fonctions d'une fonction cryptographique n'impactant pas l'état de la mémoire M1 ou n'interagissant pas avec les entrées et sorties du composant cryptographique.

Le second logiciel SW2 est capable de reproduire l'exécution des sous fonctions de chaque fonction cryptographique ayant notamment une influence sur l'état de la mémoire M1 ou sur les entrées et sorties du composant cryptographique. Le second logiciel SW2 permet donc l'exécution d'au moins une fonction aboutissant à générer un état de la mémoire M2_{STATUS} et un résultat RESULTS_2 d'une fonction équivalente à la fonction du premier logiciel SW1. Un objectif du procédé de l'invention est de comparer les états des mémoires M1_{STATUS} et M2_{STATUS} après l'exécution des deux fonctions dans chacun des environnements des branches 10 et 11 et de comparer les résultats RESULT_1 et RESULT_2 de ces deux fonctions.

La branche 10 peut être entendue comme un banc de tests ou une plateforme de tests ou encore un environnement de tests permettant de valider le premier logiciel SW1. Une fois validé, le premier logiciel SW1 peut alors être mis en production, ce qui signifie : être embarqué dans un composant cryptographique.

Les éléments de spécification SPEC 1 et SPEC 2 respectivement de la branche 11 et 10 ne sont pas nécessairement inclus dans les branches dans la mesure où les spécifications des logiciels SW1 et SW2 peuvent être des données indépendantes de l'exécution du procédé de l'invention et peuvent être utilisées pour la conception des logiciel SW1 et SW2 en amont de l'exécution du procédé.

La représentation des éléments désignant les spécifications SPEC 1 et SPEC 2 permet une meilleure compréhension de l'invention dans la mesure où on comprend que le second logiciel SW2 est compilé de manière indépendante du premier logiciel SW1. Cela constitue un avantage de l'invention. En outre, le second logiciel SW2 est une version simplifiée du premier logiciel SW1 permet de gagner un temps de conception. Les moyens de validation de la branche 10 ne traitent que des sous-fonctions d'une fonction cryptographique ayant une influence sur la mémoire ou sur les entrées et les sorties du simulateur et donc du composant cryptographique.

La spécification SPEC 1 permet de concevoir les fonctions cryptographiques du premier logiciel SW1 par exemple aux moyens d'instructions de code dans un langage donné. Selon un mode de réalisation, une partie d'instructions matérielles HW peut être codée en VHDL, une partie d'instructions logicielles SW, notamment la partie algorithmique des fonctions cryptographiques, peut être codée en langage C.

Le procédé de la présente invention permet la réalisation et l'exploitation d'un second logiciel SW2 conçu dans un même langage que le premier logiciel SW1 ou encore dans un autre langage. Lorsque ce dernier est conçu dans un autre langage, un avantage est une certaine souplesse de conception de la plateforme de test 10. Par exemple, l'utilisation d'un langage moins contraint que le langage utilisé pour coder le premier logiciel SW1 peut être choisi. A titre d'exemples, des librairies de fonctions de base peuvent être utilisées pour réduire le temps de conception du second logiciel SW2. En outre, un langage plus simple ou plus accessible peut être utilisé de sorte à faciliter la prise en main du second logiciel SW2 ou son développement.

Notamment, il peut être programmé dans un environnement de développement moins contraint. En outre, il peut s'affranchir de paramètres de conception du composant cryptographique qui imposent une optimisation du code générée. Enfin, le second logiciel SW2 peut être conçu en s'attachant à ne traiter que les variables et les paramètres liés aux fonctions cryptographiques ce qui ne peut pas être le cas du premier logiciel SW1 qui est testé dans le simulateur et qui est destiné à fonctionner dans le composant cryptographique.

Une mémoire M1 est représentée dans la branche 11 selon deux configurations :
- M1_{INIT} représente l'état de la mémoire M1 du simulateur avant toute exécution d'opérations, c'est-à-dire à l'initialisation du procédé ;
- M1_{STATUS} représente l'état de la mémoire M1 du simulateur après qu'une ou plusieurs opérations aient été effectuées, par exemple, par l'exécution d'au moins une fonction cryptographique.

La branche 10 représente une mémoire M2 ou une représentation de la mémoire M2. La mémoire M2 ou sa représentation est représentée selon deux configurations :
- M2_{INIT} représente l'état de la mémoire du banc de tests ou la valeur théorique générée à l'initialisation du procédé de l'invention ;
- M2_{STATUS} représente l'état de la mémoire du banc de tests ou la valeur générée par le second logiciel SW2 après qu'une ou plusieurs opérations aient été effectuées, par exemple, par l'exécution d'une fonction cryptographique par le second logiciel SW2 correspondante à la fonction exécutée dans le premier logiciel SW1.

Les opérations réalisées par le second logiciel SW2 sont essentiellement des opérations ne mettant qu'en oeuvre les sous fonctions d'au moins une fonction cryptographique ayant une influence sur la mémoire M2 du simulateur ou sur les entrées et sorties du simulateur qui sont identiques fonctionnellement aux entrées et sorties du composant cryptographique.

A titre d'exemple, une fonction cryptographique peut être une fonction de chiffrement d'une clef numérique. Dans ce cas, une donnée d'entrée du second logiciel SW2 peut être définie au moyen d'une interface par la définition d'une valeur en clair, c'est-à-dire non chiffrée, définissant une clef numérique d'une certaine longueur.

Le second logiciel SW2 est capable de :
- calculer la valeur chiffrée de la clef ;
- générer les données correspondant à l'état de la mémoire M2 qui peuvent correspondre à la valeur chiffrée seule ou à la valeur chiffrée seule avec d'autres données à stocker dans la mémoire, comme par exemple un identifiant ;
- retourner le résultat RESULT_2 de la fonction exécutée qui peut être par exemple un acquittement indiquant que le chiffrement est réussi. En outre, ce dernier résultat peut comporter une copie de la clef chiffrée par exemple, c'est-à-dire le résultat de la fonction appelée

La clef est chiffrée et sauvegardée dans la mémoire M2 lorsque le second logiciel SW2 exécute la fonction cryptographique. On entend également par sauvegarde d'une donnée dans la mémoire M2, le fait de générer une valeur de l'état de la mémoire M2 selon que la mémoire M2 est un composant physique dédié ou un simple fichier. L'état de la mémoire M2 est donc modifié après l'exécution d'une fonction cryptographique, cet état est noté M2_{STATUS} dans la branche 10.

De manière optionnelle, le procédé de l'invention comprend une fonction de conversion d'instructions, notée T-CASE, pour générer des instructions CDE_1. Les instructions CDE_1 sont générées à partir d'une commande simple CDE_2 destinée au second logiciel SW2. Un avantage de cette fonction de conversion est de générer une instruction conforme CDE_1 à la nomenclature des instructions utilisées dans le composant cryptographique et donc du simulateur de la branche 11. De ce fait, cette fonction de conversion d'une commande simple CDE_2 en un ensemble d'instructions CDE_1 permet de valider que la commande simple CDE_2 est représentative des instructions permettant d'activer la fonction cryptographique testée du banc de test de la branche 10 et des données d'entrées nécessaires à l'exécution d'au moins une fonction cryptographique.

La figure 1 représente une commande simple CDE_2 qui peut être exprimé simplement au moyen d'une interface utilisateur. La commande CDE_2 permet d'activer la fonction cryptographique que l'on souhaite activer et permet de définir les données d'entrées de cette fonction dans l'environnement du simulateur de la branche 11.

Une commande peut comprendre une instruction ou un ensemble d'instructions.

Par ailleurs, la branche 11, représentant le simulateur et donc le comportement conforme du premier logiciel SW1 tel qu'il sera dans le composant cryptographique, comprend une entrée pour activer les fonctions cryptographiques du premier logiciel SW1, notée CDE_1. La notation CDE_1 définit la commande comportant les instructions pour exécuter une fonction cryptographique et elle définit également l'interface physique. Cette interface physique comme cela est représentée sur la figure 1 peut être présente dans le simulateur et/ou provenir d'une interface avec la branche 10 par l'intermédiaire d'une fonction de conversion d'instructions T-CASE.

Les instructions de la commande CDE_1 peuvent être définies dans un langage complexe et peuvent intégrer des éléments non nécessaires à l'exécution d'une fonction cryptographique donnée dans son environnement. Ce dernier cas peut par exemple se produire lorsqu'une même commande permet d'exécuter plusieurs fonctions cryptographiques simultanément.

Le procédé de l'invention permet donc à partir du second logiciel SW2 de générer une commande CDE_1 conforme à l'exécution d'au moins une fonction cryptographique du premier logiciel SW1 dans l'environnement du simulateur. Cette commande CDE_1 est donc générée à l'aide d'une fonction de conversion d'instructions qui peut être incluse dans le second logiciel SW2 ou être intégrée dans un logiciel et un composant dédié comme cela est représenté à la figure 1 par le composant T-CASE. Le composant physique T-CASE représente également la fonction de conversion d'instructions de manière à simplifier la lecture du graphique.

Ce composant est capable de lire une commande CDE_2 du banc de test et de l'interpréter de manière à générer une commande CDE_1 conforme à l'environnement du simulateur. Ainsi les deux branches 10 et 11 peuvent être employées simultanément à partir d'une seule commande d'entrée CDE_2 de manière à paralléliser les fonctions cryptographiques du premier SW1 et du second SW2 logiciels qui se correspondent.

L'état de la mémoire M2_{STATUS} peut être générée à partir d'un calcul et être sauvegardé dans un fichier ou il peut être inscrit dans une mémoire M2 physique du banc de test. Suite à l'exécution d'une fonction cryptographique, le second logiciel SW2 modifie l'état initial M2_{INIT} en un nouvel état M2_{STATUS}.

La conception du second logiciel SW2 est avantageusement codé à partir de spécifications fonctionnelles identiques à celles du premier logiciel SW1 tout en utilisant par exemple un autre langage ou utilisant un autre environnement ou à partir d'une autre personne. Cette différenciation des moyens de production du premier SW1 et du second SW2 logiciels permet de garantir qu'une même erreur ne soit pas reproduite dans les logiciels SW1 et SW2. Grâce à cette différentiation de conception des deux logiciels SW1 et SW2, les tests des fonctions cryptographiques sont indépendants d'une erreur de conception qui serait identique dans le premier logiciel SW1 et dans le second logiciel SW2.

Par ailleurs, l'étape de génération des instructions T-CASE permet de tester que les instructions d'entrées sont bien lues conformément à ce qu'elles seront dans le composant cryptographique.

De manière à valider une fonction cryptographique du premier logiciel SW1, les états des mémoires M1_{STATUS} et M2_{STATUS} peuvent être comparés à l'issue de l'exécution de la fonction cryptographique testée au moyen d'une fonction de comparaison notée COMP_A. En outre, les résultats RESULT_1 et RESULT_2 des fonctions exécutées respectivement par les logiciels SW1 et SW2 peuvent être comparés par une fonction de comparaison COMP_B.

Lorsque les comparaisons concordent, une fonction cryptographique du premier logiciel SW1 peut être validée.

Un avantage de l'invention est de fournir un procédé permettant de valider la bonne exécution d'une fonction cryptographique alors qu'aucun accès à l'état de la mémoire n'est possible.

Un avantage de l'invention est de permettre non seulement de vérifier que les résultats des fonctions cryptographiques exécutées respectivement dans le banc de test 10 et dans le simulateur 11 correspondent mais également de permettre de vérifier l'intégrité de l'état de la mémoire modifié M1_{STATUS} en la comparant avec l'état de la mémoire M2_{STATUS} respectivement du simulateur et du banc de test. Cette dernière opération de comparaison des états des mémoires du banc de test 10 et du simulateur 11 permet de vérifier que les impacts de l'exécution d'une fonction cryptographique du premier logiciel SW1 sur l'état de la mémoire M1 est identique à l'impact de l'exécution d'une fonction cryptographique du second logiciel SW2 sur la mémoire M2.

En effet, lorsqu'une fonction cryptographique du premier logiciel SW1 est exécutée, elle peut impactée des données connexes de la mémoire M1 non directement générées par la fonction cryptographique. Le procédé de l'invention permet donc s'assurer que l'état de la mémoire est bien conforme aux attentes par cette opération de comparaison des états M1_{STATUS} et M2_{STATUS}.

## Revendications

1. Procédé de validation du fonctionnement d'un premier logiciel (SW1) destiné à être embarqué dans un composant cryptographique, comprenant :
▪ Une première étape réalisée dans un simulateur (11) et comportant une première exécution d'au moins une première fonction cryptographique à partir d'une première commande d'instructions (CDE_1) par le premier logiciel (SW₁) mis en oeuvre par un premier processeur et au moyen d'une première mémoire (M₁), ladite première exécution de ladite au moins une première fonction cryptographique générant :
∘ un premier état (M1_{STATUS}) de la première mémoire (M₁), ledit premier état comportant l'ensemble des données présentes dans la première mémoire après l'exécution d'une commande d'instructions (CDE_1) ;
∘ un premier résultat (RESULT_1) de la première commande (CDE_1), le premier résultat comprenant la valeur retournée par au moins un calcul de la première fonction cryptographique,
▪ une seconde étape réalisée dans un banc de tests (10) et comportant une seconde exécution d'au moins une seconde fonction cryptographique à partir d'une seconde commande d'instructions (CDE_2) par un second logiciel (SW₂) mis en oeuvre par un second processeur et au moyen d'une seconde mémoire (M₂), la première et la seconde fonctions réalisant des mêmes opérations modifiant l'état de leur mémoire respective (M1, M2), ladite seconde exécution de ladite au moins une seconde fonction cryptographique générant :
∘ un second état (M2_{STATUS}) de la seconde mémoire (M₂), ledit second état comportant l'ensemble des données présentes dans la seconde mémoire après l'exécution d'une commande d'instructions (CDE_1) ;
∘ un second résultat (RESULT _2) de la seconde commande (CDE_2), le second résultat (RESULT_2) comprenant la valeur retournée par au moins un calcul de la seconde fonction cryptographique,
▪ Une étape de validation comparant (COMP_A, COMP_B) à partir d'un calculateur:
∘ le premier état (M1_{STATUS}) de la première mémoire (M1) avec le second état (M2_{STATUS}) de la seconde mémoire (M2) ;
∘ le premier résultat (RESULT_1) avec le second résultat (RESULT_2) ;
le fonctionnement du premier logiciel étant validé si le premier état (M1_{STATUS}) de la première mémoire (M1) et le premier résultat (RESULT_1) sont identiques respectivement au second état (M2_{STATUS}) de la seconde mémoire (M2) et au deuxième résultat (RESULT_2).

2. Procédé de validation selon la revendication 1, **caractérisé en ce qu'**une fonction de conversion d'instructions (T-CASE) de la première commande d'instructions (CDE_1) génère la seconde commande d'instructions (CDE_2) pour l'exécution d'une fonction cryptographique du premier logiciel (SW1).

3. Procédé de validation selon la revendication 2, **caractérisé en ce que** la fonction de conversion d'instructions (T-CASE) est réalisée par le second logiciel (SW2) au moyen du second processeur.

4. Procédé de validation selon l'une quelconque des revendications 1 à 3, **caractérisé en ce que** l'ensemble de fonctions cryptographiques réalisées par le premier ou le second logiciel (SW1, SW2) comprend au moins l'une des fonctions suivante :
▪ Une fonction d'authentification ;
▪ Une fonction de chiffrement ou de déchiffrement ;
▪ Une fonction de signature ou de vérification d'une signature ;
▪ Une fonction de calcul d'empreintes;
▪ Une fonction de stockage de données ;
▪ Une fonction de calcul de code d'authentification de message.

5. Procédé de validation selon l'une quelconque des revendications précédentes, **caractérisé en ce que** l'état d'une mémoire (M1 _{STATUS}, M2_{STATUS}) comprend, en outre, l'ensemble des données présentes dans la mémoire après l'exécution d'une commande d'instructions (CDE_1, CDE_2).

6. Procédé de validation selon l'une quelconque des revendications précédentes, **caractérisé en ce que** le résultat (RESULT_1, RESULT_2) d'une fonction cryptographique exécutée au moyen d'une commande (CDE_1, CDE_2) comprend la valeur retournée par au moins un calcul d'une fonction cryptographique.

7. Procédé de validation selon l'une quelconque des revendications précédentes, **caractérisé en ce que** le résultat (RESULT_1, RESULT_2) d'une commande comprend au moins l'une des données de la liste suivante :
▪ Un acquittement indiquant le succès ou l'échec de l'exécution d'une fonction cryptographique ;
▪ Un acquittement d'une fonction d'authentification ;
▪ Un résultat d'une fonction de chiffrement ou de déchiffrement ;
▪ Une signature numérique ;
▪ Un résultat d'une vérification de signature numérique;
▪ Une empreinte ;
▪ Un résultat d'une vérification d'empreinte;
▪ Un code d'authentification de message (MAC);
▪ Un résultat d'une vérification de code d'authentification de message (MAC).

8. Procédé de validation selon l'une quelconque des revendications précédentes, **caractérisé en ce que** chaque fonction cryptographique du premier logiciel (SW1) et du second logiciel (SW2) comprend des opérations visant à réaliser des calculs sur au moins une valeur comprise dans des instructions de commande d'entrée (CDE_1, CDE_2) et à sauvegarder cette valeur dans une mémoire (M1, M2) associée au logiciel (SW1, SW2).

9. Procédé de validation selon l'une quelconque des revendications précédentes, **caractérisé en ce que** chaque fonction cryptographique du premier logiciel (SW1) comprend :
▪ un premier ensemble d'opérations ayant une première influence sur l'état de la mémoire (M1), la première influence étant liée à une modification de l'état de la mémoire ;
▪ un second ensemble d'opérations ayant une seconde influence sur au moins une entrée et/ou une sortie d'une interface du premier logiciel (SW1), la seconde influence étant liée à la lecture ou la modification de données transitant sur lesdites interfaces ;
▪ un troisième ensemble d'opérations n'ayant pas d'influence ni sur la mémoire (M1) ni sur une entrée ou une sortie.

10. Procédé de validation selon la revendication 9, **caractérisé en ce que** chaque fonction cryptographique du second logiciel (SW2) comprend le premier et le second ensemble d'opérations.

11. Procédé de validation selon la revendication 9 ou 10, **caractérisé en ce que** chaque fonction cryptographique du second logiciel (SW2) ne comprend pas le troisième ensemble d'opérations.

12. Système de tests d'un logiciel exécutant un ensemble de fonctions cryptographiques d'un logiciel destiné à être intégré dans un composant cryptographique, comprenant
▪ un simulateur (11) comprenant un premier processeur pour l'exécution d'une première fonction cryptographique, une première mémoire enregistrant un nouvel état après l'exécution de la première fonction cryptographique, des premières interfaces pour lire une commande d'exécution (CDE_1) de la première fonction cryptographique et pour retourner une valeur du résultat (RESULT_1 ) de l'exécution de ladite fonction ;
▪ un banc de test (10) comprenant un second processeur pour l'exécution d'une seconde fonction cryptographique comprenant des opérations réalisées par la première fonction cryptographique exécutée dans le simulateur, la première fonction cryptographique correspondant ainsi à la première fonction cryptographique exécutée dans l'environnement du banc de test (10), une seconde mémoire (M2) enregistrant un nouvel état après l'exécution de la seconde fonction cryptographique, des secondes interfaces pour lire une commande d'exécution (CDE_2) et pour retourner une valeur du résultat (RESULT _2) de l'exécution de la seconde fonction ;
▪ un calculateur permettant de comparer les états des deux mémoires (M1_{STATUS,} M2_{STATUS}) à la fin de l'exécution de la première et de la seconde fonction et permettant de comparer les valeurs des résultats (RESULT_1, RESULT_2) de chaque fonction.

## Patentansprüche

1. Validierungsverfahren der Funktionsweise einer ersten Software (SW1), die dazu bestimmt ist, in einem kryptographischen Bauteil eingebaut zu sein, umfassend:
▪ einen ersten Schritt, der in einem Simulator (11) ausgeführt wird und eine erste Ausführung wenigstens einer ersten kryptographischen Funktion ausgehend von einem ersten Anweisungsbefehl (CDE_1) durch die erste Software (SW₁), die durch einen ersten Prozessor und mittels eines ersten Speichers (M₁) umgesetzt wird, umfasst, wobei die genannte erste Ausführung der genannten wenigstens einen ersten kryptographischen Funktion erzeugt:
o einen ersten Zustand (M1_{STATUS}) des ersten Speichers (M₁), wobei der genannte erste Zustand die Gruppe der Daten umfasst, die in dem ersten Speicher nach der Ausführung eines Anweisungsbefehls (CDE_1) vorhanden sind;
o ein erstes Ergebnis (RESULT_1) des ersten Befehls (CDE_1), wobei das erste Ergebnis den Wert umfasst, der durch wenigstens eine Berechnung der ersten kryptographischen Funktion zurückgegeben wird;
▪ einen zweiten Schritt, der in einer Testbank (10) ausgeführt sind und eine zweite Ausführung wenigstens einer zweiten kryptographischen Funktion ausgehend von einem zweiten Anweisungsbefehl (CDE_2) durch eine zweite Software (SW₂), die durch einen zweiten Prozessor und mittels eines zweiten Speichers (M₂) umgesetzt wird, umfasst, wobei die erste und die zweite Funktion dieselben Operationen ausführen, die den Status ihres jeweiligen Speichers (M1, M2) ändern, wobei die genannte zweite Ausführung der genannten wenigstens einen zweiten kryptographischen Funktion erzeugt:
∘ einen zweiten Zustand (M2_{STATUS}) des zweiten Speichers (M2), wobei der genannte zweite Zustand die Gruppe der Daten umfasst, die in dem zweiten Speicher nach der Ausführung eines Anweisungsbefehls (CDE_2) vorhanden sind;
o ein zweites Ergebnis (RESULT_2) des zweiten Befehls (CDE_2), wobei das zweite Ergebnis (RESULT_2) den Wert umfasst, der durch wenigstens eine Berechnung der zweiten kryptographischen Funktion zurückgegeben wird;
▪ einen Validierungsschritt, der ausgehend von einem Rechner vergleicht (COMP_A, COMP_B):
o den ersten Zustand (M1_{STATUS}) des ersten Speichers (M1) mit dem zweiten Zustand (M2_{STATUS}) des zweiten Speichers (M2);
o das erste Ergebnis (RESULT_1) mit dem zweiten Ergebnis (RESULT_2);
wobei die Funktionsweise der ersten Software validiert ist, wenn der erste Zustand (M1_{STATUS}) des ersten Speichers (M1) und das erste Ergebnis (RESULT_1) jeweils mit dem zweiten Zustand (M2_{STATUS}) des zweiten Speichers (M2) und dem zweiten Ergebnis (RESULT_2) identisch sind.

2. Validierungsverfahren gemäß Anspruch 1, **dadurch gekennzeichnet, dass** eine Umwandlungsfunktion von Anweisungen (T-CASE) des ersten Anweisungsbefehls (CDE_1) den zweiten Anweisungsbefehl (CDE_2) für die Ausführung einer kryptographischen Funktion der ersten Software (SE1) erzeugt.

3. Validierungsverfahren gemäß Anspruch 2, **dadurch gekennzeichnet, dass** die Umwandlungsfunktion von Anweisungen (T-CASE) durch die zweite Software (SW2) mittels des zweiten Prozessors ausgeführt ist.

4. Validierungsverfahren gemäß irgendeinem der Ansprüche 1 bis 3, **dadurch gekennzeichnet, dass** alle kryptographischen Funktionen, die von der ersten oder der zweiten Software (SW1, SW2) ausgeführt sind, wenigstens eine der folgenden Funktionen umfassen:
▪ Eine Authentifizierungsfunktion:
▪ Eine Verschlüsselungs-oder Entschlüsselungsfunktion;
▪ Eine Signatur- oder Überprüfungsfunktion einer Signatur;
▪ Eine Berechnungsfunktion von Abdrücken;
▪ Eine Speicherfunktion von Daten;
▪ Eine Berechnungsfunktion des Authentifizierungscodes einer Nachricht.

5. Validierungsverfahren gemäß irgendeinem der voranstehenden Ansprüche, **dadurch gekennzeichnet, dass** der Status eines Speichers (M1_{STATUS}, M2_{STATUS}) darüber hinaus alle Daten umfasst, die in dem Speicher nach der Ausführung eines Anweisungsbefehls (CDE_1, CDE_2) vorhanden sind.

6. Validierungsverfahren gemäß irgendeinem der voranstehenden Ansprüche, **dadurch gekennzeichnet, dass** das Ergebnis (RESULT_1, RESULT_2) einer kryptographischen Funktion, die mittels eines Befehls (CDE_1, CDE_2) ausgeführt wird, den Wert umfasst, der durch wenigstens eine Berechnung einer kryptographischen Funktion zurückgegeben wird.

7. Validierungsverfahren gemäß irgendeinem der voranstehenden Ansprüche, **dadurch gekennzeichnet, dass** das Ergebnis (RESULT_1, RESULT 2) eines Befehls wenigstens eines der Datenelemente der folgenden Liste umfasst:
▪ Eine Quittierung, die den Erfolg oder Misserfolg der Ausführung einer kryptographischen Funktion anzeigt;
▪ Eine Quittierung einer Authentifizierungsfunktion;
▪ Ein Ergebnis einer Verschlüsselungs- oder Entschlüsselungsfunktion;
▪ Eine digitale Signatur;
▪ Ein Ergebnis einer Überprüfung der digitalen Signatur;
▪ Einen Abdruck;
▪ Ein Ergebnis einer Abdrucksüberprüfung;
▪ Einen Authentifizierungscode einer Nachricht (MAC);
▪ Ein Ergebnis einer Überprüfung eines Authentifizierungscodes einer Nachricht (MC).

8. Validierungsverfahren gemäß irgendeinem der voranstehenden Ansprüche, **dadurch gekennzeichnet, dass** jede kryptographische Funktion der ersten Software (SW1) und der zweiten Software (SW2) Operationen umfasst, die das Ausführen der Berechnungen auf wenigstens einem Wert anstrebt, der in den Eingangs-Befehlsanweisungen (CDE_1, CDE_2) inbegriffen ist, und diesen Wert in einem Speicher (M1, M2) speichert, der der Software (SW1, SW2) zugeordnet ist.

9. Validierungsverfahren gemäß irgendeinem der voranstehenden Ansprüche, **dadurch gekennzeichnet, dass** jede kryptographische Funktion der ersten Software (SW1) umfasst:
▪ eine erste Gruppe von Operationen mit einem ersten Einfluss auf den Status des Speichers (M1), wobei der erste Einfluss mit einer Modifikation des Zustandes des Speichers verbunden ist;
▪ eine zweite Gruppe von Operationen mit einem zweiten Einfluss auf wenigstens einen Eingang und / oder einen Ausgang einer Schnittstelle der ersten Software (SW1), wobei der zweite Einfluss mit dem Lesen oder der Modifikation von Daten verbunden ist, die auf die genannten Schnittstellen übergehen;
▪ eine dritte Gruppe von Operationen ohne Einfluss weder auf den Speicher (M1) noch auf einen Eingang oder einen Ausgang.

10. Validierungsverfahren gemäß Anspruch 9, **dadurch gekennzeichnet, dass** jede kryptographische Funktion der zweiten Software (SW2) die erste und die zweite Gruppe von Operationen umfasst.

11. Validierungsverfahren gemäß Anspruch 9 oder 10, **dadurch gekennzeichnet, dass** jede kryptographische Funktion der zweiten Software (SW2) die dritte Gruppe von Operationen nicht umfasst.

12. Testsystem einer Software, die eine Gruppe von kryptographischen Funktionen einer Software ausführt, die dazu bestimmt ist, in ein kryptographisches Bauteil eingebaut zu sein, umfassend:
▪ einen Simulator (1), umfassend einen ersten Prozessor für die Ausführung einer ersten kryptographischen Funktion, wobei ein erster Speicher einen neuen Status nach der Ausführung der ersten kryptographischen Funktion speichert, erste Schnittstellen zum Lesen eines Ausführungsbefehls (CDE_1) der ersten kryptographischen Funktion und zum Zurückgeben eines Wertes des Ergebnisses (RESULT_1) der Ausführung der genannten Funktion;
▪ eine Testbank (10), umfassend einen zweiten Prozessor für die Ausführung einer zweiten kryptographischen Funktion, umfassend Operationen, die von der ersten kryptographischen Funktion in dem Simulator ausgeführt sind, wobei die erste kryptographische Funktion somit der ersten kryptographischen Funktion entspricht, die in der Umgebung der Testbank (10) ausgeführt ist, wobei ein zweiter Speicher (M2) einen neuen Zustand nach der Ausführung der zweiten kryptographischen Funktion speichert, zweite Schnittstellen zum Lesen eines Ausführungsbefehls (CDE_2) und zum Zurückgeben eines Wertes des Ergebnisses (RESULT_2) der Ausführung der zweiten Funktion;
▪ einen Rechner, der das Vergleichen der Status der zwei Speicher (M1_{STATUS}, M2_{STATUS}) am Ende der Ausführung der ersten und der zweiten Funktion zulässt und das Vergleichen der Werte der Ergebnisse (RESULT_1, RESULT_2) jeder Funktion zulässt.

## Claims

1. Method for validating the operation of a first software (SW1) intended to be embedded in a cryptographic component comprising:
▪ A first step carried out in the simulator (11) and comprising a first execution of at least one first cryptographic function using a first command of instructions (CDE_1) by the first software (SW₁) implemented by a first processor and by means of a first memory (M₁), said first execution of at least one cryptographic function generating:
∘ a first status (M1_{STATUS}) of the first memory (M₁), said first status comprising all of the data present in the first memory after the execution of a command of instructions (CDE_1);
∘ a first result (RESULT_1) of the first command (CDE_1), the first result comprising the value returned by at least one calculation of the first cryptographic function,
▪ a second step carried out in a test bench (10) comprising a second execution of at least one second cryptographic function using a second command of instructions (CDE_2) by a second software (SW₂) implemented by a second processor and by means of a second memory (M₂), with the first and the second functions carrying out same operations modifying the status of their respective memory (M1, M2), said second execution of at least the second command (CDE_2) generating:
∘ a second status (M2_{STATUS}) of the second memory (M2), said second status comprising all of the data present in the second memory after the execution of a command of instructions (CDE_1);
∘ a second result (RESULT_2) of the second command (CDE_2), the second result (RESULT_2) comprising the value returned by at least one calculation of the second cryptographic function,
▪ A step of validation comparing (COMP_A, COMP_B) using a calculator:
∘ the first status (M1_{STATUS}) of the first memory (M1) with the second status (M2_{STATUS}) of the second memory (M2);
∘ the first result (RESULT_1) with the second result (RESULT _2).

2. Method for validating according to claim 1, **characterised in that** a function for converting instructions (T-CASE) of the first command of instructions (CDE_1) generates the second command of instructions (CDE_2) for the execution of a cryptographic function of the first software (SW1).

3. Method for validating according to claim 2, **characterised in that** the function for converting instructions (T-CASE) is carried out by the second software (SW2) by means of the second processor.

4. Method for validating according to any of claims 1 to 3, **characterised in that** the set of cryptographic functions carried out by the first or the second software (SW1, SW2) comprises at least one of the following functions:
▪ An authentication function;
▪ An encrypting or decrypting function;
▪ A signature function or function for verifying a signature;
▪ A function for calculating fingerprints;
▪ A function for storing data;
▪ A function for calculating message authentication code.

5. Method for validating according to any of the preceding claims, **characterised in that** the status of a memory (M1_{STATUS}, M2_{STATUS}) comprises, furthermore, all of the data present in the memory after the execution of a command of instructions (CDE_1, CDE 2).

6. Method for validating according to any of the preceding claims, **characterised in that** the result (RESULT_1, RESULT_2) of a cryptographic function executed by means of a command (CDE_1, CDE_2) comprises the value returned by at least one calculation of a cryptographic function.

7. Method for validating according to any of the preceding claims, **characterised in that** the result (RESULT_1, RESULT 2) of a command comprises at least one of the pieces of data in the following list:
▪ An acknowledgement indicating the success or failure of the execution of a cryptographic function;
▪ An acknowledgement of an authentication function;
▪ A result of an encrypting or decrypting function;
▪ A digital signature;
▪ A result of a verification of a digital signature;
▪ A fingerprint;
▪ A result of a fingerprint verification;
▪ A message authentication code (MAC);
▪ A result of a verification of a message authentication code (MAC).

8. Method for validating according to any of the preceding claims, **characterised in that** each cryptographic function of the first software (SW1) and of the second software (SW2) comprises operations aiming to perform calculations on at least one value comprised in input command instructions (CDE_1, CDE_2) and to save this value in a memory (M1, M2) associated with the software (SW1, SW2).

9. Method for validating according to any of the preceding claims, **characterised in that** each cryptographic function of the first software (SW1) comprises:
▪ a first set of operations that has a first influence on the status of the memory (M1), with the first influence being linked to a modification of the status of the memory;
▪ a second set of operations that has a second influence on at least one input and/or one output of an interface of the first software (SW1), with the second influence being linked to the reading or to the modification of data transmitted over said interfaces;
▪ a third set of operations that does not have any influence on the memory (M1) or on an input or an output.

10. Method for validating according to claim 9, **characterised in that** each cryptographic function of the second software (SW2) comprises the first and the second set of operations.

11. Method for validating according to claim 9 or 10, **characterised in that** each cryptographic function of the second software (SW2) does not comprise the third set of operations.

12. Testing system for a software executing a set of cryptographic functions of a software intended to be embedded into a cryptographic component, comprising:
▪ a simulator (11) comprising a first processor for the execution of a first cryptographic function, a first memory recording a new status after the execution of the first cryptographic function, first interfaces for reading an execution command (CDE_1) of the first cryptographic function and for returning a value of the result (RESULT_1) of the execution of said function;
▪ a test bench (10) comprising a second processor for the execution of a second cryptographic function comprising operations carried out by the first cryptographic function executed in the simulator, with the first cryptographic function corresponding as such to the first cryptographic function executed in the environment of the test bench (10), a second memory (M2) recording a new status after the execution of the second cryptographic function, second interfaces for reading an execution command (CDE_2) and for returning a value of the result (RESULT_2) of the execution of the second function;
▪ a calculator making it possible to compare the statuses of the two memories (M1_{STATUS}, M2_{STATUS}) at the end of the execution of the first and of the second function and making it possible to compare the values of the results (RESULT_1, RESULT_2) of each function.
